(19) **Europäisches Patentamt / European Patent Office / Office européen des brevets**

(11) **EP 4 641 694 A1**

(12) **EUROPEAN PATENT APPLICATION**
published in accordance with Art. 153(4) EPC

(43) Date of publication:
**29.10.2025 Bulletin 2025/44**

(21) Application number: **22969277.7**

(22) Date of filing: **23.12.2022**

(51) International Patent Classification (IPC):
$H01M\ 4/62^{(2006.01)}$    $H01M\ 4/131^{(2010.01)}$
$H01M\ 4/485^{(2010.01)}$    $H01M\ 4/505^{(2010.01)}$
$H01M\ 4/525^{(2010.01)}$    $H01M\ 10/052^{(2010.01)}$
$H01M\ 10/0565^{(2010.01)}$    $H01M\ 10/0566^{(2010.01)}$

(52) Cooperative Patent Classification (CPC):
H01M 4/505; H01M 4/131; H01M 4/1391;
H01M 4/1397; H01M 4/364; H01M 4/485;
H01M 4/525; H01M 4/5825; H01M 4/62;
H01M 4/623; H01M 10/052; H01M 10/0525;
H01M 10/0565; H01M 10/0566; H01M 2004/021;
(Cont.)

(86) International application number:
**PCT/JP2022/047726**

(87) International publication number:
**WO 2024/134896 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kabushiki Kaisha Toshiba**
**Tokyo 105-0023 (JP)**

(72) Inventors:
• YANAGI, Masato
  Tokyo 105-0023 (JP)
• NISHIO, Naoki
  Tokyo 105-0023 (JP)
• HASEGAWA, Takuya
  Tokyo 105-0023 (JP)

(74) Representative: **Hoffmann Eitle**
**Patent- und Rechtsanwälte PartmbB**
**Arabellastraße 30**
**81925 München (DE)**

(54) **ELECTRODE, BATTERY AND BATTERY PACK**

(57) According to one embodiment, an electrode includes an active material comprising-substance and a binder. The active material comprising-substance includes an active material including a lithium nickel cobalt manganese-containing oxide and 0.4 wt% or more and 1 wt% or less of an alkali component including at least one of lithium carbonate or lithium hydroxide. The binder has a ratio B/A of 0.4 or more and 1.5 or less, where B is an intensity of a peak appearing in a range of 1580 cm$^{-1}$ or more and 1600 cm$^{-1}$ or less in a Fourier transformation infrared spectroscopic spectrum, and A is an intensity of a peak appearing in a range of 1662 cm$^{-1}$ or more and 1682 cm$^{-1}$ or less in the Fourier transformation infrared spectroscopic spectrum.

FIG. 1

(Cont. next page)

(52) Cooperative Patent Classification (CPC): (Cont.)
    H01M 2004/028; Y02E 60/10

**Description**

FIELD

Embodiments described herein relate generally to an electrode, a battery, and a battery pack.

BACKGROUND

In recent years, a nonaqueous electrolyte battery is expected to be applied to a large system for electric aircraft, power storage or the like in addition to an attempt to replace gasoline with the nonaqueous electrolyte battery by using the nonaqueous electrolyte battery as a power source for an electric vehicle (EV), a hybrid electric vehicle (HEV) or the like. Therefore, there is a demand for improvement in capacity characteristics, large current output performance, and long life performance in a high-temperature environment.

Examples of an active material of the nonaqueous electrolyte battery include nickel-cobalt-lithium manganate (hereinafter abbreviated as NCM). NCM is, for example, a polycrystalline system in which primary particles having fine particle shapes are aggregated to form secondary particles. In addition, in order to obtain a large capacity, a ratio of nickel in NCM is also increased.

On the other hand, spinel type lithium titanate (for example, $Li_4Ti_5O_{12}$) is used as a negative electrode active material. Since the spinel type lithium titanate reacts at a potential 0.5 V or more higher than a Li reaction potential, precipitation of lithium dendrite can be suppressed. As a result, since the spinel type lithium titanate can avoid risks such as short circuit, self-discharge, and ignition, it is possible to provide a battery having high safety and excellent life performance. In addition, increase of a specific surface area of the spinel type lithium titanate makes it possible to increase an output of the battery.

The nonaqueous electrolyte battery has a problem of a large increase in resistance during cycling.

CITATION LIST

PATENT LITERATURE

[Patent Literature 1] Jpn. Pat. Appln. KOKAI Publication No. 2007-103134
[Patent Literature 2] Jpn. PCT National Publication No. 2013-534031
[Patent Literature 3] Jpn. Pat. Appln. KOKAI Publication No. 2019-164960

SUMMARY

An object to be achieved is to provide an electrode capable of suppressing an increase in resistance during a charge-and-discharge cycle, and a secondary battery and a battery pack including the electrode.

According to one embodiment, an electrode includes an active material comprising-substance and a binder. The active material comprising-substance includes an active material including a lithium nickel cobalt manganese-containing oxide. The active material comprising-substance further includes 0.4 wt% or more and 1 wt% or less of an alkali component including at least one of lithium carbonate or lithium hydroxide. The binder has a ratio B/A of 0.4 or more and 1.5 or less, where B is an intensity of a peak appearing in a range of 1580 $cm^{-1}$ or more and 1600 $cm^{-1}$ or less in a Fourier transformation infrared spectroscopic spectrum, and A is an intensity of a peak appearing in a range of 1662 $cm^{-1}$ or more and 1682 $cm^{-1}$ or less in the Fourier transformation infrared spectroscopic spectrum.

According to the embodiment, a battery includes:

a positive electrode including the electrode according to the embodiment; and
a negative electrode.

According to the embodiment, a battery pack including the battery according to the embodiment.

BRIEF DESCRIPTION OF THE DRAWINGS

FIG. 1 is a plan view schematically illustrating an example of an electrode according to an embodiment.

FIG. 2 illustrates a cross section of an example of a battery according to an embodiment cut in a thickness direction.

FIG. 3 is an enlarged cross-sectional view of a part A of FIG. 2.

FIG. 4 is a partially cutaway perspective view of another example of the battery according to the embodiment.

FIG. 5 is an exploded perspective view of an examples of a battery pack according to an embodiment.

FIG. 6 is a block diagram illustrating an electric circuit of the battery pack illustrated in FIG. 5.

FIG. 7 illustrates a Fourier transformation infrared spectroscopic spectrum of a binder of a positive electrode of Example 1.

FIG. 8 is a graph illustrating a particle size distribution of an active material of the positive electrode of Example 1.

DETAILED DESCRIPTION

The following techniques have been proposed so far. It has been proposed that water is kneaded in a step of producing a coating solution, that a carbonate is generated on a surface of a positive electrode material by reacting $CO_2$ with an alkali compound generated by a reaction between a positive electrode active material and water, and that a decomposition reaction of an electrolytic solution is suppressed by suppressing contact between a carbon material and the electrolytic solution. In addition, it has been reported that adhesiveness of an electrode material is improved by adding an organic material having a high alkalinity to the electrode. In addition, it has been reported that, by adding acetic anhydride as an acid to a positive electrode mixture paste using a positive electrode active material containing a certain amount of LiOH, LiOH and $Li_2CO_3$ on a surface of the positive electrode active material are removed, so that reaction resistance is reduced and an output at a low temperature is increased.

As a result of intensive studies, the present inventors have found that a lithium nickel cobalt manganese-containing oxide such as NCM has problems which will be explained below. When a ratio of nickel in a composite oxide is increased in order to improve a capacity of the lithium nickel cobalt manganese-containing oxide, the alkali component contained in a raw material for the composite oxide tends to remain in the synthesized composite oxide. Examples of the alkali component include $Li_2CO_3$ and LiOH. On the other hand, as a binder for the electrode, polyvinylidene fluoride (PVdF) and the like are known. A fluororesin binder such as polyvinylidene fluoride (PVdF) causes a defluorination reaction in the presence of an alkali component, and the PVdFs are crosslinked with each other, whereby gelation proceeds. As the gelation proceeds, the PVdFs are aggregated to deteriorate the ability as the binder, and a binding force is weakened, so that the mixture layer is peeled off from a current collector. Since a current does not flow in a portion where the mixture layer is peeled off from the current collector, a conductive path becomes non-uniform, degradation unevenness of the active material occurs, and the resistance increases. In addition, the fluororesin binder such as PVdF selectively binds to the active material in the presence of the alkali component. As a result, an amount of the binder binding to a conductive agent in the electrode decreases, so that dispersibility of the conductive agent decreases. The decrease in dispersibility of the conductive agent causes current unevenness during charge and discharge, and deteriorates the life performance. Based on the above findings, it has been found that, by controlling an amount of the alkali component contained in the active material and an amount of a functional group of the binder, the active material and the conductive agent can be uniformly dispersed in the electrode, so that the life performance is improved.

That is, an electrode of an embodiment includes: an active material comprising-substance containing an active material containing a lithium nickel cobalt manganese-containing oxide; an alkali component contained in the active material comprising-substance in an amount of 0.4 wt% or more and 1 wt% or less and containing at least one of lithium carbonate or lithium hydroxide; and a binder having a ratio B/A of 0.4 or more and 1.5 or less, where B is an intensity of a peak appearing in a range of 1580 $cm^{-1}$ or more and 1600 $cm^{-1}$ or less in a Fourier transformation infrared spectroscopic spectrum, and A is an intensity of a peak appearing in a range of 1662 $cm^{-1}$ or more and 1682 $cm^{-1}$ or less in the Fourier transformation infrared spectroscopic spectrum. In this electrode, the binder can be uniformly dispersed in the electrode constituent components such as the active material, and thus current unevenness at the time of power distribution such as charge and discharge can be suppressed. Therefore, a resistance increase rate can be reduced, and the life performance can be improved.

(First Embodiment)

Hereinafter, the electrode of the embodiment will be described in detail. The electrode of the embodiment may be a negative electrode or a positive electrode.

The electrode includes a mixture layer and a current collector on which the mixture layer is stacked. The mixture layer contains an active material comprising-substance and a binder. The mixture layer can optionally contain a conductive agent.

The active material comprising-substance contains a lithium nickel cobalt manganese-containing oxide as an active material (referred to as first active material). Examples of the lithium nickel cobalt manganese-containing oxide include lithium nickel cobalt manganate. The lithium nickel cobalt manganese-containing oxide is represented by, for

example, $Li_aNi_{(1-b-c-d)}Co_bMn_cM_dO_2$ (1). In Formula (1), $1 \leq a \leq 1.2$, $0 < b \leq 0.4$, $0 < c \leq 0.4$, $0 \leq d \leq 0.1$, and M is one or more elements selected from the group consisting of Fe, Cu, Ti, Mg, Al, W, Y, B, Mo, Nb, Zn, Sn, Zr, Ga, and V.

The lithium nickel cobalt manganese-containing oxide represented by Formula (1) has a large capacity per unit weight, and a large capacity can be obtained by using it up to an electrode potential of 4.2 V(vs. $Li/Li^+$) or more. A molar ratio a in Formula (1) can vary when the electrode allows lithium ions to be inserted and extracted. A more preferable range is $1.05 \leq a \leq 1.15$.

By setting a molar ratio b in Formula (1) to $0 < b \leq 0.4$ and a molar ratio c to $0 < c \leq 0.4$, the lithium nickel cobalt manganese-containing oxide further contains Co and Mn in addition to Ni as a transition metal, so that the capacity per unit weight increases. More preferable ranges of the molar ratio b and the molar ratio c are $0.05 \leq b \leq 0.2$ and $0.05 \leq c \leq 0.2$, respectively.

A more preferable range of a molar ratio d of the element M in Formula (1) is $0.01 \leq d \leq 0.05$. The inclusion of the element M, for example, can provide the following effects. Since Al can reduce lattice distortion, Li ion diffusibility can be improved. Mg can improve electron conductivity of bulk, and thus can improve an apparent discharge capacity. Furthermore, cycle stability under high voltage can be improved. Zr can improve cycle characteristics. Ti can improve the cycle characteristics by relaxing a phase change under high-voltage charge and discharge. Ga can improve the electron conductivity of the bulk, and thus can improve the cycle characteristics.

The lithium nickel cobalt manganese-containing oxide may contain an element other than the types described above as an inevitable impurity.

The lithium nickel cobalt manganese-containing oxide may have a particle shape. Examples of particles of the lithium nickel cobalt manganese-containing oxide include single particles (or also referred to as single primary particles), and secondary particles (or also referred to as polycrystals) in which the primary particles are aggregated. A mixture of a single particle and a secondary particle may be used. Although the polycrystalline lithium nickel cobalt manganese-containing oxide can have an increased specific surface area, the oxidation reaction of the electrolytic solution easily occurs in a charge-and-discharge cycle or a calender test at a high potential, and gas generation and resistance increase are greater than those in the case of a single particle. In addition, cracking of the active material particles, a change to a degraded structure of a rock salt type, and the like may occur during the cycle. Since the single particle of the lithium nickel cobalt manganese-containing oxide are less likely to be cracked than the secondary particle, it is possible to suppress the exposure of a new surface due to cracking. By suppressing the exposure of the new surface, an increase in amount of an unreacted alkali component can be suppressed.

The active material comprising-substance may contain another active material (second active material) other than the lithium nickel cobalt manganese-containing oxide. The second active material may include various oxides, for example, a lithium-containing cobalt oxide (for example, $LiCoO_2$), manganese dioxide, lithium-manganese composite oxide (for example, $LiMn_2O_4$ and $LiMnO_2$), lithium-containing nickel oxide (for example, $LiNiO_2$), lithium-containing nickel cobalt oxide (for example, $LiNi_{0.8}Co_{0.2}O_2$), lithium-containing iron oxide, lithium-containing vanadium oxide, and chalcogen compounds such as titanium disulfide and molybdenum disulfide. The type of the active material used may be one or two or more.

The particles of the active material containing the lithium nickel cobalt manganese-containing oxide are desirably occupied by the single particles in a higher proportion than the secondary particles. This can suppress cracking of the active material particles. Active material particles having a breaking strength of 30 MPa or more and 300 MPa or less can be suppressed from cracking, so that an increase in alkali component can be suppressed. A more preferable range of the breaking strength is 120 MPa or more and 300 MPa or less.

The active material containing the lithium nickel cobalt manganese-containing oxide can have a ratio D90/D10 of 4 or less in a volume-based cumulative frequency distribution of particle sizes based on a particle size distribution by a laser diffraction scattering method. The particle size distribution is a volume-based cumulative frequency distribution that is accumulated from a small particle size side of the active material. D10 is a particle size at which a cumulative frequency from a small particle size side of the cumulative frequency distribution is 10%. D90 is a particle size at which the cumulative frequency from the small particle size side of the cumulative frequency distribution is 90%. The particle size distribution having a ratio D90/D10 of 4 or less is sharp and has high monodispersibility. Therefore, an active material having a particle size distribution in which the ratio D90/D10 is 4 or less can be suppressed from cracking, so that an increase in alkali component can be suppressed. The ratio D90/D10 is an index indicating a variation in particle size, and a smaller value can be a smaller variation. The ratio D90/D10 is 1 when all the particles have the same particle size.

The particles of the active material containing the lithium nickel cobalt manganese-containing oxide can have an average particle size D50 by a laser diffraction scattering method of 2 $\mu$m or more and 8 $\mu$m or less. D50 is a particle size at which the cumulative frequency from the small particle size side of the cumulative frequency distribution is 50%.

A content of the first active material (lithium nickel cobalt manganese-containing oxide) in the active material comprising-substance can be in a range of 50 wt% or more and 99.6 wt% or less.

The active material comprising-substance contains 0.4 wt% or more and 1 wt% or less of an alkali component. The alkali component contains at least one of lithium carbonate ($Li_2CO_3$) or lithium hydroxide (LiOH). The alkali component can be derived from, for example, a raw material used in synthesizing the lithium nickel cobalt manganese-containing oxide. When the content of the alkali component in the active material comprising-substance is less than 0.4 wt%, the amount of the binder binding to the active material decreases. Then, since a polyene formation reaction of the binder is suppressed, a crosslinking reaction of the binder does not proceed, and the binding force between the mixture layer and the current collector is reduced. The reduction in binding force causes peeling-off of the mixture layer from the current collector during the cycle and deterioration unevenness in the electrode, so that the resistance increase rate increases, and the life characteristics decrease. When the content of the alkali component in the active material comprising-substance is more than 1 wt%, the amount of the binder binding to the active material becomes excessive. The polyene formation reaction of the binder proceeds, so that the crosslinking reaction of the binder is accelerated, and the binding force between the mixture layer and the current collector is increased. However, the resistance increases as the active material is coated with the binder. The amount of the binder binding to the conductive agent decreases, and the dispersibility of the conductive agent in the electrode decreases, so that current unevenness occurs at the time of power distribution, and the resistance increase rate increases, so that the life characteristics decrease. The content of the alkali component in the active material comprising-substance is more preferably 0.5 wt% or more and 0.7 wt% or less.

The alkali component is, for example, attached to or deposited on the active material particles in a solid state. More specifically, the alkali component may be attached to or deposited on the surface of the active material particle in a solid state or may be attached to or deposited at a grain boundary of the active material particle in a solid state.

The binder contains a binder (first binder) having a ratio B/A of 0.4 or more and 1.5 or less. B is an intensity of a peak appearing in a range of 1580 cm$^{-1}$ or more and 1600 cm$^{-1}$ or less in a Fourier transformation infrared spectroscopic spectrum. A is an intensity of a peak appearing in a range of 1662 cm$^{-1}$ or more and 1682 cm$^{-1}$ or less in the Fourier transformation infrared spectroscopic spectrum.

When the ratio B/A is less than 0.4, the amount of the binder binding to the active material decreases. Then, since a polyene formation reaction of the binder is suppressed, a crosslinking reaction of the binder does not proceed, and the binding force between the mixture layer and the current collector is reduced. The reduction in binding force causes peeling-off of the electrode during the cycle and deterioration unevenness in the electrode, so that the resistance increase rate increases, and the life characteristics decrease. On the other hand, when the ratio B/A exceeds 1.5, the binder selectively binds to the active material. Since the binder is bound to the active material which is the main component of the mixture layer, the binding force between the current collector and the mixture layer increases. However, the resistance increases as the active material is coated with the binder. Also, the amount of the binder binding to the conductive agent decreases, and the dispersibility of the conductive agent in the electrode decreases, so that current unevenness occurs at the time of power distribution, and the resistance increase rate increases, so that the life performance decreases. A more preferable range of the ratio B/A is 0.5 or more and 1.2 or less.

The first binder may be polyvinylidene fluoride having a COOZ group. Z contains at least one element of H or Li. The COOZ group may be bound to a main chain or a side chain of polyvinylidene fluoride. The peak appearing in the range of 1580 cm$^{-1}$ or more and 1600 cm$^{-1}$ or less in the Fourier transformation infrared spectroscopic spectrum may be a peak derived from a COOX group. X is an atom other than H. The COOX group is a group of a carboxylate. An example of X is Li. A peak derived from a COOLi group tends to appear around 1590 cm$^{-1}$. The peak appearing in the range of 1662 cm$^{-1}$ or more and 1682 cm$^{-1}$ or less in the Fourier transformation infrared spectroscopic spectrum may be a peak derived from a COOH group (carboxy group). The peak derived from the COOH group tends to appear around 1672 cm$^{-1}$. The COOX group is mainly generated by a reaction of the COOH group of the first binder with the active material. It is presumed that, in the first binder, the polyene formation reaction proceeds by the alkali component contained in the active material comprising-substance, and that the COOH group (carboxy group) is modified to the COOX group (group of a carboxylate). That is, a degree of progress of the polyene formation reaction, that is, a degree of binding of the binder to the active material is determined from the ratio B/A. The ratio B/A is an index of the degree of binding of the binder to the active material. When the ratio B/A is small, the number of COOH groups is larger than that of COOX groups, and thus the amount of the binder binding to the active material tends to be small. On the other hand, when the ratio B/A is large, the number of COOH groups is smaller than that of COOX groups, and thus the binder tends to selectively bind to the active material. The present inventors have found that there is a correlation between the ratio B/A and the amount of the alkali component, and have achieved an improvement in life performance.

The ratio B/A can be adjusted, for example, by changing an acid value or molecular weight of polyvinylidene fluoride having a COOZ group.

A content of the first binder in the mixture layer can be in a range of 0.5 wt% or more and 5 wt% or less.

The binder may contain a binder (referred to as second binder) other than the first binder. Examples of the second binder include polyvinylidene fluoride having no COOZ group, polytetrafluoroethylene (PTFE), fluororubber, styrenebutadiene rubber (SBR), carboxymethyl cellulose (CMC), polyimide, and polyamide. The type of the binder may be one or two or more.

Examples of the conductive agent include carbon black such as acetylene black and Ketjen black, graphite, carbon fiber, carbon nanotube, and fullerene. The type of the conductive agent may be one or two or more.

Blending proportions of the active material comprising-substance, the conductive agent, and the binder in the mixture layer are preferably 75 wt% or more and 96 wt% or less for the active material, 3 wt% or more and 20 wt% or less for the conductive agent, and 1 wt% or more and 5 wt% or less for the binder.

The current collector is preferably an aluminum foil or an aluminum alloy foil, and an average crystal grain size is preferably 50 $\mu$m or less, more preferably 30 $\mu$m or less, and even more preferably 5 $\mu$m or less. The current collector made of the aluminum foil or aluminum alloy foil having such an average crystal grain size can dramatically increase the strength, can densify the electrode at a high press pressure, and can increase the battery capacity.

A thickness of the current collector is preferably 20 $\mu$m or less, and more preferably 15 $\mu$m or less. A purity of the aluminum foil is preferably 99% or more. The aluminum alloy is preferably an alloy containing an element such as magnesium, zinc, or silicon. On the other hand, a content of a transition metal such as iron, copper, nickel, or chromium is preferably 1% or less.

The electrode is produced by, for example, suspending an active material comprising-substance, a conductive agent, and a binder in an appropriate solvent, applying the obtained slurry to a current collector, and drying the slurry to produce a mixture layer, and then pressing the mixture layer. In addition, the active material comprising-substance, the conductive agent, and the binder may be formed into pellets and used as a mixture layer.

A density of the electrode can be 3.1 g/cm$^3$ or more and 3.5 g/cm$^3$ or less.

Next, a specific example of the electrode according to the first embodiment will be described with reference to the drawings.

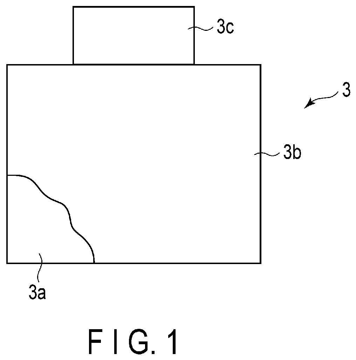

FIG. 1 is a partially cutaway plan view schematically illustrating an example of the electrode according to the embodiment. An example of a positive electrode is illustrated as an example of the electrode.

A positive electrode 3 illustrated in FIG. 1 includes a positive electrode current collector 3a and a positive electrode active material-containing layer 3b as a mixture layer provided on a surface of the positive electrode current collector 3a. The positive electrode active material-containing layer 3b is supported on a main surface of the positive electrode current collector 3a.

In addition, the positive electrode current collector 3a includes a portion where the positive electrode active material-containing layer 3b is not provided on the surface thereof. This portion serves as a positive electrode tab 3c. In the illustrated example, the positive electrode tab 3c is a narrow portion having a width narrower than that of the positive electrode active material-containing layer 3b. The width of the positive electrode tab 3c may be narrower than the width of the positive electrode active material-containing layer 3b as described above, or may be the same as the width of the positive electrode active material-containing layer 3b. Instead of the positive electrode tab 3c which is a part of the positive electrode current collector 3a, a separate conductive member may be electrically connected to the positive electrode 3 and used as an electrode tab (positive electrode tab).

Methods for measuring the active material composition, the alkali component, the ratio B/A, the breaking strength, the average particle size, the ratio D90/D10, and the molecular weight and acid value of PVdF, in the electrode of the embodiment, will be described below.

When the electrode to be measured is incorporated in a battery, the electrode as a measurement sample is taken out from the battery as follows. The battery is discharged, and disassembled in a glove box in an argon atmosphere, and the electrode is taken out. The electrode is washed with ethyl methyl carbonate and then vacuum-dried. In this way, the measurement sample is obtained.

(Confirmation of active material composition)

The composition of the active material can be confirmed by measuring the surface of the electrode by fluorescent X-ray (XRF).

(Confirmation of alkali component)

Whether or not lithium carbonate ($Li_2CO_3$) is contained in the alkali component is confirmed by the following method. As a sample, a mixture layer cut out from the electrode is used. Specifically, a mixture layer having an area of 500 cm$^2$ is cut out from the electrode as the sample. A weight of the active material comprising-substance in the mixture layer as the sample is determined from the area of 500 cm$^2$ of the mixture layer and a basis weight (g/m$^2$) of the mixture layer.

As an instrument, an AGK type $CO_2$ simple and precise quantifier manufactured by TSUTSUI RIKAGAKU KIKAI K.K. is used. About 50 ml of water is added to the sample cut out from the electrode by the above method, a solution obtained by mixing sulfuric acid and water at a volume ratio of 1:5 is then added for neutralization, and a small excess is further added. Then the solution is boiled to separate $CO_2$ with water vapor. When these are absorbed in an aqueous $BaCl_2$ solution in which a known amount of NaOH is allowed to coexist, a reaction shown in (1) below occurs. Then, as shown in Formula (2), remaining NaOH is quantified by neutralization titration, and consumed NaOH is converted into $Li_2CO_3$. [Chemical Formula 1]

$$CO_2+BaCl_2+H_2O \rightarrow BaCO_3+2HCl \qquad (1)$$

$$2HCl+2NaOH \rightarrow 2NaCl+2H_2O \qquad (2)$$

Whether or not lithium hydroxide (LiOH) is contained in the alkali component is confirmed by the following method.

To 10 g of the sample cut out from the electrode by the above method, 50 ml of water is added, followed by stirring with a magnetic stirrer for 1 hour. After filtration, a total volume of 15 ml of the filtrate is collected with a pipette, and 20 ml of a 1% barium chloride solution is added thereto. Titration is performed with hydrochloric acid at a concentration of 0.05 mol/L until the pH becomes less than 8.4 while measuring the pH, and the titration amount is converted into LiOH.

(Measurement of content of alkali component in active material comprising-substance)

A mixture layer having an area of 500 $cm^2$ is cut out from the electrode as a sample. The sample is added to water and subjected to stirring for 10 minutes, then a lithium compound present in the water is regarded as an alkali component in the active material comprising-substance, and the pH is titrated with an acid to determine the weight of the alkali component, and a weight proportion (wt%) of the alkali component to the active material comprising-substance is determined. A weight of the active material comprising-substance in the mixture layer as the sample is determined from the area of 500 $cm^2$ of the mixture layer and a basis weight ($g/m^2$) of the mixture layer. The type of the alkali component is specified by the above method.

(Measurement of basis weight of mixture layer)

A sample having a predetermined area is cut out from the electrode, and a weight W1 of the sample and a weight W2 of the current collector included in the sample are measured. A basis weight of the mixture layer is obtained by dividing a value obtained by subtracting W2 from W1 by the area of the sample.

(Method for measuring ratio B/A)

The electrode washed and dried by the above method is finely cut, and a binder is extracted under reduced pressure with a Soxhlet extractor using N,N-dimethylformamide (DMF) as a solvent. DMF is removed from the extract by distillation under reduced pressure. The extracted binder is dissolved in an eluent to obtain a sample liquid. The obtained sample liquid is subjected to component analysis by Fourier transform infrared spectroscopy (FT-IR) measurement. The sample is collected on a diamond anvil and measured by a micro transmission method. The apparatus used is VERTEX70v/HYPERION3000 manufactured by BRUKER. The measurement mode is a method of collection on diamond anvil - micro transmission. The resolution is 4 $cm^{-1}$. The number of integrations is 128.

In the obtained FT-IR spectrum, the intensity of a peak appearing in a range of 1580 $cm^{-1}$ or more and 1600 $cm^{-1}$ or less is defined as B, and the intensity of a peak appearing in a range of 1662 $cm^{-1}$ or more and 1682 $cm^{-1}$ or less is defined as A. A base point is taken at both tails of each peak to draw a base line, and the height from the base line to the top of the peak is taken as the intensity of the peak. B/A is calculated from a ratio between the obtained two peak intensities.

(Method for measuring breaking strength)

The electrode is immersed in an N-methyl-2-pyrrolidone solution and subjected to stirring to peel off the mixture layer from the current collector. From the peeled mixture layer, components having a size of 2 to 6 $\mu$m are selected, and an extremely small amount thereof is sprayed on a pressure plate to compress their particles one by one using a Shimadzu micro compression tester MCT-510. The breaking strength is calculated by the following formula.

$$Cs = 2.8P/\pi d^2$$

Cs represents a breaking strength (numerical unit: N/$mm^2$ or MPa), P represents a test force (numerical unit: N), and d represents a particle size (numerical unit: mm). Whether the mixture layer components having a size of 2 to 6 $\mu$m are lithium nickel cobalt manganese-containing oxides can be confirmed by performing elemental analysis such as ICP emission spectrometry on this sample.

(Method for measuring average particle size)

The particle size distribution of the electrode can be measured by a laser diffraction/scattering method which will be described below. In the electrode washed and dried by the above method, the active material-containing layer is separated from the current collector using, for example, a spatula to obtain a powdery electrode mixture sample containing active material particles. Then, a powdery sample is charged into a measurement cell filled with N-methylpyrrolidone (NMP) until the concentration reaches a measurable concentration. The capacity of the measurement cell and the measurable concentration differ depending on the particle size distribution measuring apparatus. The measurement cell containing NMP and the electrode mixture sample dissolved therein is irradiated with ultrasonic waves for 5 minutes. The output of ultrasonic wave is, for example, in a range of 35 W to 45 W. For example, when NMP is used as the solvent in an amount of about 50 ml, the solvent mixed with the measurement sample is irradiated with ultrasonic waves having an output of about 40 W for 300 seconds. By such ultrasonic irradiation, the aggregation between the conductive agent particles and the active material particles can be released. The measurement cell is inserted into a particle size distribution measuring apparatus by the laser diffraction scattering method, and the particle size distribution is measured. Examples of the particle size distribution measuring apparatus include Microtrac3100 and Microtrac3000II (both manufactured by MicrotracBEL Corp.), or an apparatus having a function equivalent thereto. Thus, the particle size distribution of the electrode can be obtained.

(Method for calculating ratio D90/D10)

The particle size distribution obtained by the above method is a volume-based cumulative frequency distribution that is accumulated in order from a small particle size side. In the particle size distribution, the particle size D10 at which the volume-based cumulative frequency from the small particle size side is 10% and the particle size D90 at which the volume-based cumulative frequency from the small particle size side is 90% are determined. The ratio D90/D10 is calculated from the obtained value.

(Method for measuring molecular weight of PVdF)

The molecular weight of PVdF is measured using GPC (gel permeation chromatography), which is a type of liquid chromatography in which separation is performed based on a difference in molecular size. A multi-angle laser light scattering photometer (MALS) and a differential refractometer (RI) are incorporated in this apparatus. The light scattering intensity and the refractive index difference of the molecular chain solution size-fractionated by the GPC apparatus are measured according to the elution time, thereby sequentially calculating the molecular weight of the solute and the content rate thereof. Finally, the absolute molecular weight distribution and absolute average molecular weight value of a polymeric substance are determined. The sample liquid used in the measurement is prepared by the following method. To 25 mg of a sample, 5 mL of a solvent is added, and the mixture is gently stirred at room temperature (dissolution is visually recognized). Thereafter, filtration is performed using a 0.5 $\mu$m filter to obtain a sample liquid. When the molecular weight of PVdF contained in the electrode is measured, a sample liquid is obtained by the following method. The electrode is washed and dried. The electrode is finely cut, and PVdF is extracted under reduced pressure with a Soxhlet extractor using N,N-dimethylformamide (DMF) as a solvent. DMF is removed from the extract by distillation under reduced pressure. To 25 mg of the extracted PVdF, 5 mL of a solvent is added, and the mixture is gently stirred at room temperature (dissolution is visually recognized). Thereafter, filtration is performed using a 0.5 $\mu$m filter to obtain a sample liquid.
The apparatuses and conditions used in the measurement will be described below.
The apparatus is a gel permeation chromatograph - multi-angle light scatterometer (Device No. GPC-MALS-4). As a detector, a differential refractive index detector (Optilab T-rEX manufactured by Wyatt Technology) and a multi-angle light scattering detector (DAWN HELEOS II manufactured by Wyatt Technology) are used. A column is one each of TSKgel$\alpha$-M and TSKgel$\alpha$-3000 ($\varphi$7.8 mm $\times$ 30 cm, manufactured by Tosoh Corporation). The solvent is N-methyl-2-pyrrolidinone (NMP) with addition of 0.05 M lithium chloride. A flow rate is 0.8 mL/min. A column temperature is 23°C. A detector temperature is 23°C. An injection volume is 0.2 mL. For data processing, a data processing system (ASTRA) manufactured by Wyatt Technology Corporation and a GPC data processing system manufactured by TRC Corporation are used.

(Method for measuring acid value of PVdF)

The acid number is a mass in milligrams of potassium hydroxide required to neutralize an acid in 1 gram of a chemical substance. Details of measurement conditions will be shown below. The measuring apparatus is a potentiometric titrator AT-710. The electrode is a composite glass electrode C-173. An internal liquid is a saturated perchloric acid ethanol solution. The sample volume is about 2 to 3 g. The solvent is methyl isobutyl ketone (MIBK). A reaction liquid is a 0.01 mol/L tetra-n-butylammonium hydroxide MIBK solution. The solution is prepared by diluting a 0.1 mol/L tetra-n-butylammonium hydroxide·benzenemethanol solution. A titrant is a 0.01 mol/L perchloric acid MIBK solution.

The measurement method using the measuring apparatus will be described below.

(1) Into an Erlenmeyer flask, a sample and 30 mL of a reaction liquid, and 30 mL of MIBK are charged. They are charged, stirred, then dispersed with an ultrasonic cleaner for 30 minutes, and centrifuged (10,000 rpm, 15 min), and then a supernatant and a filler are dispersed.

(2) 10 mL of the supernatant is collected into a sample bottle with a whole pipette, and 20 mL of MIBK is added to obtain a measurement solution.

(3) Titration is performed using a potentiometric titrator, and the obtained inflection point is defined as end point.

(4) A blank test is also performed by the same method, and the acid value is calculated by the following calculation formula.

$$\text{Acid value (mgKOH/g)} = 6 \times (V0 - V1) \times N \times 56.11 \times f/S \qquad \text{Calculation Formula:}$$

S is a sample weight (g), V0 is a titrant amount (mL) in the blank test, V1 is a titrant amount (mL) in the main test, N is a concentration of the titrant (0.01 mol/L), and f is a factor of the titrant (1.061).

The electrode of the first embodiment includes an active material comprising-substance containing an active material containing a lithium nickel cobalt manganese-containing oxide and 0.4 wt% or more and 1 wt% or less of an alkali component containing at least one of lithium carbonate or lithium hydroxide; and a binder having a ratio B/A of 0.4 or more and 1.5 or less. According to the electrode of the first embodiment, the binder is uniformly dispersed in the constituent components such as the active material, and thus the current unevenness at the time of power distribution such as charge and discharge can be suppressed, so that the resistance increase rate can be reduced, and the life performance can be improved.

(Second Embodiment)

According to a second embodiment, a battery is provided. The electrode of the second embodiment includes a positive electrode, a negative electrode, and an electrolyte. At least one of the positive electrode or the negative electrode includes the electrode according to the first embodiment. The battery may further include a separator. The positive electrode, the negative electrode, and the separator may configure an electrode group. The electrolyte may be held in the electrode group. The battery may further include a container member that houses the electrode group and the electrolyte. The battery may further include a positive electrode terminal electrically connected to the positive electrode and a negative electrode terminal electrically connected to the negative electrode. At least a part of the positive electrode terminal and at least a part of the negative electrode terminal may extend to the outside of the container member.

Such a battery may be, for example, a lithium ion secondary battery. The battery also includes, for example, a nonaqueous electrolyte battery containing a nonaqueous electrolyte as the electrolyte.

Hereinafter, the negative electrode, positive electrode, electrolyte, separator, container member, positive electrode terminal, and negative electrode terminal will be described in detail. The following example is an example in which the electrode of the first embodiment is applied to the positive electrode.

(1) Positive electrode

The positive electrode includes a positive electrode current collector and a positive electrode active material-containing layer (positive electrode mixture layer) that is carried on one surface or both the front and back surfaces of the positive electrode current collector and contains a positive electrode active material, a conductive agent, and a binder.

The positive electrode may be the electrode according to the first embodiment. In an aspect as the positive electrode, the positive electrode current collector, the positive electrode active material, and the positive electrode active material-containing layer of the positive electrode correspond to the current collector, the active material comprising-substance, and the mixture layer of the electrode according to the first embodiment, respectively. Since the electrode according to the first embodiment has been described above, the description of the positive electrode here is omitted.

(2) Negative electrode

The negative electrode includes a negative electrode current collector and a negative electrode active material-containing layer (negative electrode mixture layer) that is carried on one surface or both the front and back surfaces of the negative electrode current collector and contains a negative electrode active material. The negative electrode active material-containing layer can contain a conductive agent and a binder, in addition to the negative electrode active material.

Hereinafter, the negative electrode active material, the conductive agent, the binder, and the negative electrode current collector will be described.

Examples of the negative electrode active material include titanium-containing oxides, carbonaceous materials, and metal compounds. The type of the negative electrode active material may be one or two or more.

Examples of the titanium-containing oxides include a lithium-titanium composite oxide, a metal composite oxide containing Ti and at least one element selected from the group consisting of P, V, Sn, Cu, Ni, and Fe, and a niobium-titanium composite oxide. Examples of the lithium-titanium composite oxide include a lithium-titanium composite oxide having a spinel type crystal structure, and ramsdellite type $Li_{2+x}Ti_3O_7$ (x varies in a range of $-1 \leq x \leq 3$ through charge and discharge reactions). Examples of the metal composite oxide containing Ti and at least one element selected from the group consisting of P, V, Sn, Cu, Ni, and Fe include $TiO_2\text{-}P_2O_5$, $TiO_2\text{-}V_2O_5$, $TiO_2\text{-}P_2O_5\text{-}SnO_2$, and $TiO_2\text{-}P_2O_5\text{-}MO$ (M is at least one element selected from the group consisting of Cu, Ni and Fe). Examples of the niobium-titanium composite oxide include a niobium-titanium composite oxide having a composition represented by the general formula: $Li_mTi_{1-n}M3_nNb_{2-l}M4_lO_{7+\sigma}$ (M3 is at least one element selected from the group consisting of Zr, Si, Sn, Fe, Co, Mn, and Ni, M4 is at least one element selected from the group consisting of V, Nb, Ta, Mo, W, and Bi, $0 \leq m \leq 5$, $0 \leq n < 1$, $0 \leq l < 2$, and $-0.3 \leq \sigma \leq 0.3$) and having a monoclinic crystal structure, and $Ti_2Nb_{10}O_{19}$. The metal composite oxide contains lithium upon allowing lithium to be inserted through charging.

The titanium-containing oxide preferably includes a lithium-titanium composite oxide. An electrode containing a titanium-containing oxide such as a lithium-titanium composite oxide can exhibit a Li insertion potential of 0.4 V(vs. Li/Li$^+$) or more as a value relative to an oxidation-reduction potential of lithium. Therefore, even when input and output with a large current are repeated, precipitation of metallic lithium on the electrode surface can be prevented. In addition, the lithium-titanium composite oxide has lower input resistance than that of the niobium-titanium composite oxide. Furthermore, since the reaction potential based on Li is higher (on the noble side) than that of the niobium-titanium composite oxide, a side reaction with the electrolyte is less likely to occur, and the resistance increase rate tends to be low. The lithium-titanium composite oxide particularly preferably includes a lithium-titanium composite oxide having a spinel type crystal structure. Specific examples of such a spinel type lithium-titanium composite oxide include lithium titanate having a spinel structure, represented by $Li_{4+a}Ti_5O_{12}$, where the value of the subscript a changes within a range of $0 \leq a \leq 3$ through charging and discharging.

The carbonaceous material is, for example, natural graphite, artificial graphite, coke, vapor-grown carbon fibers, mesophase pitch-based carbon fibers, spherical carbon, or resin-fired carbon. More preferable examples of the carbonaceous material include vapor-grown carbon fibers, mesophase pitch-based carbon fibers, and spherical carbon. The carbonaceous material preferably has a (002) plane with a lattice spacing $d_{002}$ of 0.34 nm or less according to X-ray diffraction.

As the metal compound, a metal sulfide or a metal nitride can be used. As the metal sulfide, for example, titanium sulfide such as $TiS_2$, for example, molybdenum sulfide such as $MoS_2$, and, for example, iron sulfide such as FeS, $FeS_2$, or $Li_xFeS_2$ can be used. As the metal nitride, lithium cobalt nitride (for example, $Li_sCo_tN$; $0 < s < 4$ and $0 < t < 0.5$) can be used.

The active material may have a particulate form. Examples of the active material particles may include active material primary particles and active material secondary particles. The secondary particles are formed by aggregation of the primary particles.

The secondary particles preferably have an average particle size (average secondary particle size) of 1 $\mu$m or more and 100 $\mu$m or less. When the average particle size of the secondary particles is within this range, they are easy to handle in industrial production, and the weight and thickness can be made uniform in a coating film for producing the electrode. Furthermore, it is possible to prevent deterioration in surface smoothness of the electrode. The average particle size of the secondary particles is more preferably 2 $\mu$m or more and 30 $\mu$m or less.

The specific surface area of the secondary particles as measured by a BET method is preferably 3 m$^2$/g or more and 50 m$^2$/g or less. When the specific surface area is 3 m$^2$/g or more, it is possible to sufficiently secure insertion/extraction sites of lithium ions. When the specific surface area is 50 m$^2$/g or less, the secondary particles are easy to handle in industrial production. More preferably, the secondary particles have a specific surface area of 5 m$^2$/g or more and 50 m$^2$/g or less as measured by the BET method. A method for measuring the specific surface area by the BET method will be described later.

The conductive agent can have an action of enhancing current collection performance and suppressing contact resistance between the active material and the current collector. Examples of the conductive agent include carbonaceous materials such as acetylene black, carbon black, graphite, carbon nanofibers, and carbon nanotubes. These carbonaceous materials may be used alone, or a plurality of the carbonaceous substances may be used.

The binder can have an action of binding the negative electrode active material particles, the conductive agent, and the current collector. Examples of the binder include polytetrafluoroethylene (PTFE), polyvinylidene fluoride (PVdF), carboxylic acid-modified PVdF, fluororubber, styrene butadiene rubber, acrylic resin, and copolymers thereof, polyacrylic acid, and polyacrylonitrile. The type of the binder can be one or two or more.

Blending ratios of the negative electrode active material, the conductive agent, and the binder are preferably in a range of 70 wt% or more and 97.5 wt% or less for the negative electrode active material, 2 wt% or more and 20 wt% or less for the conductive agent, and 0.5 wt% or more and 10 wt% or less for the binder, respectively. An amount of the conductive agent is set to 2 wt% or more, so that the current collection performance of the active material-containing layer can be improved, and excellent large current performance and low temperature performance can be expected. An amount of the binder is set to 0.5 wt% or more, so that binding between the active material-containing layer and the current collector is sufficient, whereby excellent high temperature storage performance can be expected. On the other hand, from the viewpoint of increasing the capacity, the amount of the conductive agent is preferably 20 wt% or less, and the content of the binder is preferably 10 wt% or less.

When the negative electrode active material is a material capable of allowing lithium ions to be inserted and extracted, a material electrochemically stable at the lithium ion insertion and extraction potential of the negative electrode active material can be used as the negative electrode current collector. The negative electrode current collector is preferably a metal foil made of at least one selected from copper, nickel, stainless steel, and aluminum, or an alloy foil made of an aluminum alloy containing at least one element selected from Mg, Ti, Zn, Mn, Fe, Cu, and Si. As the shape of the negative electrode current collector, various shapes can be used according to the application of the battery. A thickness of the current collector can be, for example, 20 $\mu$m or less, or 15 $\mu$m or less.

The negative electrode can be produced by, for example, the following method. First, the negative electrode active material, the binder, and, if necessary, the conductive agent are suspended in a commonly used solvent such as N-methylpyrrolidone to prepare a slurry for producing a negative electrode. The obtained slurry is applied onto the negative electrode current collector. The applied slurry is dried, and the dried coating film is pressed, whereby a negative electrode including a negative electrode current collector and a negative electrode active material-containing layer formed on the negative electrode current collector can be obtained.

(3) Electrolyte

Examples of the electrolyte include a nonaqueous electrolyte. Examples of the nonaqueous electrolyte include a liquid nonaqueous electrolyte prepared by dissolving an electrolyte salt (solute) in a nonaqueous solvent, and a gel nonaqueous electrolyte obtained by combining a liquid nonaqueous electrolyte and a polymer material.

Examples of the electrolyte salt include lithium salts such as lithium perchlorate ($LiClO_4$), lithium hexafluorophosphate ($LiPF_6$), lithium tetrafluoroborate ($LiBF_4$), lithium arsenic hexafluoride ($LiAsF_6$), lithium difluorophosphate ($LiPO_2F_2$), lithium trifluoromethanesulfonate ($LiCF_3SO_3$), and lithium bistrifluoromethylsulfonylimide [$LiN (CF_3SO_2)_2$]. These electrolyte salts may be used alone or as a mixture of two or more thereof.

The electrolyte salt is preferably dissolved in a nonaqueous solvent in a range of 0.5 mol/L or more and 2.5 mol/L or less.

Examples of the nonaqueous solvent include organic solvent such as cyclic carbonates such as ethylene carbonate (EC), propylene carbonate (PC), and vinylene carbonate (VC) ; linear carbonates such as dimethyl carbonate (DMC), ethyl methyl carbonate (EMC), and diethyl carbonate (DEC); cyclic ethers such as tetrahydrofuran (THF) and 2-methyl tetrahydrofuran (2MeTHF) ; linear ethers such as dimethoxyethane (DME); cyclic esters such as $\gamma$-butyrolactone (BL); linear esters such as methyl acetate, ethyl acetate, methyl propionate, and ethyl propionate; acetonitrile (AN); and sulfolane (SL). These organic solvents can be used alone or in the form of a mixture of two or more.

Examples of the polymeric material used in the gel nonaqueous electrolyte include polyvinylidene fluoride (PVdF), polyacrylonitrile (PAN), and polyethylene oxide (PEO).

(4) Separator

The separator can be disposed, for example, on at least one of the positive electrode or the negative electrode or between the positive electrode and the negative electrode.

The separator can be, for example, a porous film, synthetic resin nonwoven fabric, or the like including polyethylene (PE), polypropylene (PP), cellulose, or polyvinylidene fluoride (PVdF).

(5) Container member

The container member may be formed of a laminate film or a metal container. When a metal container is used, a lid can be integrated with or separated from the container. A thickness of the metal container is more preferably 0.5 mm or less or 0.2 mm or less. Examples of the shape of the container member include a flat type, a rectangular type, a cylindrical type, a coin type, a button type, a sheet type, and a laminated type. The container member may be a container member for a small battery mounted in a portable electronic device or the like, or may be a container member for a large battery mounted in a two-wheeled or four-wheel automobile.

A thickness of the laminate film container member is desirably 0.2 mm or less. Examples of the laminate film include a multilayer film including a resin film and a metal layer disposed between the resin films. The metal layer is preferably an aluminum foil or an aluminum alloy foil, in order to reduce weight. The resin film can be, for example, a polymer material such as polypropylene (PP), polyethylene (PE), nylon, or polyethylene terephthalate (PET). The laminate film can be formed into a shape of a container member by performing sealing through thermal fusion.

The metal container is made of aluminum, an aluminum alloy, or the like. The aluminum alloy is preferably an alloy containing an element such as magnesium, zinc, or silicon. In aluminum or an aluminum alloy, the content of the transition metal such as iron, copper, nickel, or chromium is preferably 100 ppm or less in order to dramatically improve long-term reliability and heat dissipation in a high-temperature environment.

The metal container made of aluminum or an aluminum alloy desirably has an average crystal grain size of 50 μm or less, more preferably 30 μm or less, and even more preferably 5 μm or less. By setting the average crystal grain size to 50 μm or less, the strength of the metal container made of aluminum or an aluminum alloy can be dramatically increased, and the container can be further thinned. As a result, it is possible to realize a battery that is lightweight, has high output, and is excellent in long-term reliability, and is suitable for an in-vehicle application and the like.

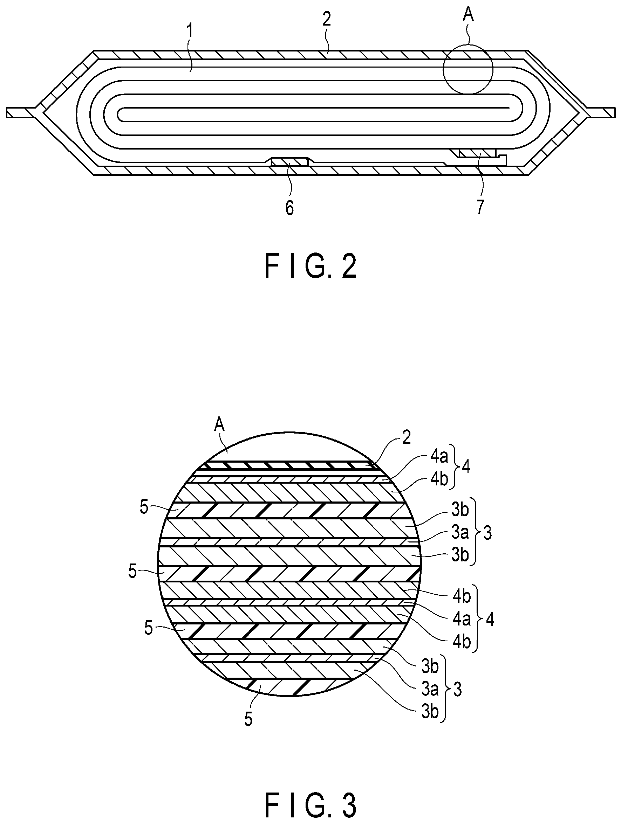

An example of the battery will be described with reference to FIGS. 2 and 3. The flat-type battery illustrated in FIG. 2 includes a flat-shaped wound electrode group 1, a container member 2, a positive electrode terminal 7, a negative electrode terminal 6, and an electrolyte (not illustrated). The container member 2 is a bag-shaped container member made of a laminate film. The wound electrode group 1 is housed in the container member 2. As illustrated in FIG. 3, the wound electrode group 1 includes a positive electrode 3, a negative electrode 4, and a separator 5, and is formed by spirally winding and press-molding a stack in which the negative electrode 4, the separator 5, the positive electrode 3, and the separator 5 are stacked in this order from the outside.

The positive electrode 3 includes a positive electrode current collector 3a and a positive electrode active material-containing layer 3b. The positive electrode active material-containing layer 3b contains a positive electrode active material. The positive electrode active material-containing layer 3b is formed on both surfaces of the positive electrode current collector 3a. The negative electrode 4 includes a negative electrode current collector 4a and a negative electrode active material-containing layer 4b. The negative electrode active material-containing layer 4b contains a negative electrode active material. In a portion of the negative electrode 4 located on the outermost side, the negative electrode active material-containing layer 4b is formed only on one surface on an inner surface side of the negative electrode current collector 4a. For the other portions of the negative electrode 4, the negative electrode active material-containing layers 4b are formed on both surfaces of the negative electrode current collector 4a.

As illustrated in FIG. 2, the positive electrode terminal 7 is electrically connected to the positive electrode 3 in the vicinity of the outer peripheral end of the wound electrode group 1. In addition, the negative electrode terminal 6 is electrically connected to the negative electrode 4 in the portion of the outermost layer. The positive electrode terminal 7 and the negative electrode terminal 6 extend outside through an opening of the container member 2.

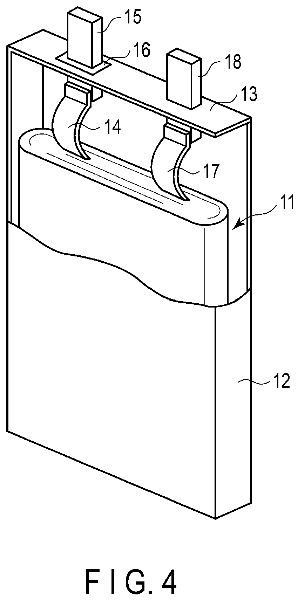

The battery is not limited to those having the configuration as illustrated in FIGS. 2 and 3 described above, and may have, for example, the configuration illustrated in FIG. 4.

In the rectangular battery illustrated in FIG. 4, the wound electrode group 11 is housed in a bottomed rectangular cylindrical container 12 made of metal as a container member. A rectangular lid body 13 is welded to an opening of the container 12. The flat wound electrode group 11 can have, for example, the same configuration as the wound electrode group 1 described with reference to FIGS. 2 and 3.

One end of a negative electrode tab 14 is electrically connected to the negative electrode current collector, and the other end thereof is electrically connected to a negative electrode terminal 15. The negative electrode terminal 15 is fixed to the rectangular lid body 13 by hermetic sealing with a glass material 16 interposed therebetween. One end of a positive electrode tab 17 is electrically connected to the positive electrode current collector, and the other end thereof is electrically connected to the positive electrode terminal 18 fixed to the rectangular lid body 13.

The negative electrode tab 14 is made of, for example, a material such as aluminum or an aluminum alloy containing an element such as Mg, Ti, Zn, Mn, Fe, Cu, or Si. The negative electrode tab 14 is preferably made of the same material as the negative electrode current collector, in order to reduce contact resistance between the negative electrode tab and the negative electrode current collector.

The positive electrode tab 17 is made of, for example, a material such as aluminum or an aluminum alloy containing an element such as Mg, Ti, Zn, Mn, Fe, Cu, or Si. The positive electrode tab 17 is preferably made of the same material as the positive electrode current collector, in order to reduce contact resistance between the positive electrode tab and the positive electrode current collector.

In the illustrated battery, the wound electrode group in which the separator is wound together with the positive electrode and the negative electrode is used, but a stacked electrode group in which the separator is folded zigzag and the positive electrode and the negative electrode are alternately disposed at the folded portions may be used.

The battery of the second embodiment described above includes the electrode of the first embodiment as at least one of the positive electrode or the negative electrode. Therefore, since the battery of the second embodiment can suppress an increase in resistance associated with the progress of the charge-and-discharge cycle, the charge-and-discharge cycle life performance can be improved.

(Third Embodiment)

According to a third embodiment, a battery pack is provided. The battery pack includes the electrode of the first embodiment or the battery according to the second embodiment.

The battery pack according to the third embodiment can include one or more batteries (single batteries) according to the second embodiment described above. The plurality of batteries that can be included in the battery pack can be electrically connected to each other in series or in parallel to form a battery module. The battery pack may include a plurality of battery modules.

Next, an example of the battery pack according to the third embodiment will be described with reference to the drawings.

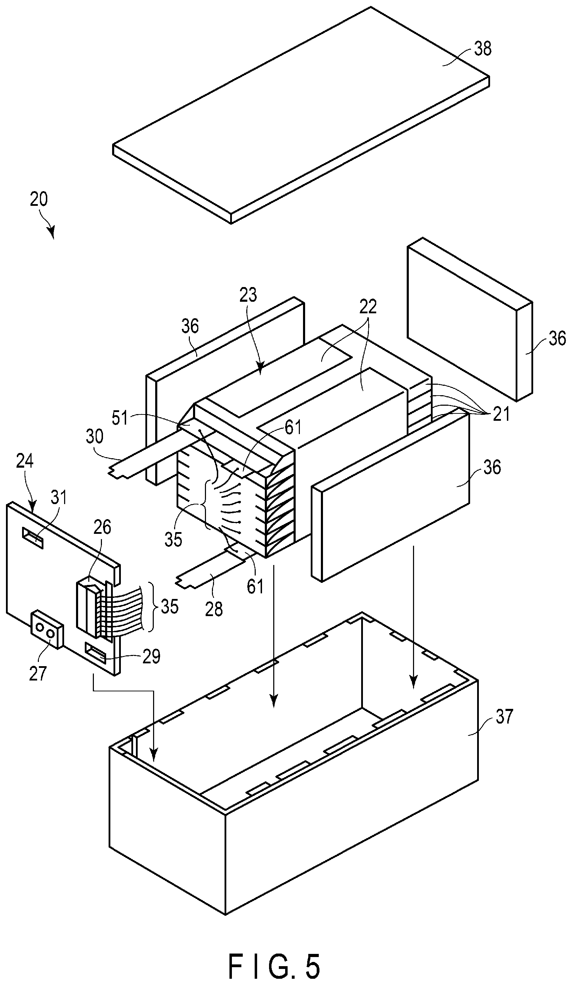

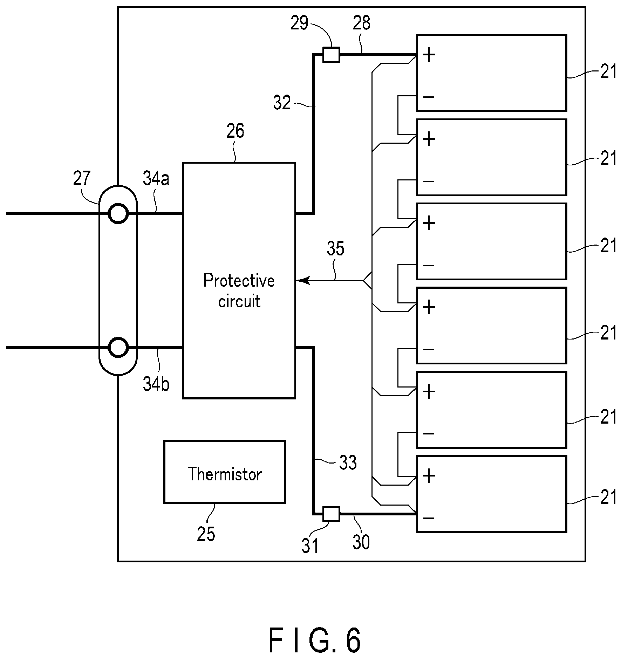

FIG. 5 is an exploded perspective view of an example of the battery pack according to the embodiment. FIG. 6 is a block diagram illustrating an electric circuit of the battery pack of FIG. 5.

A battery pack 20 illustrated in FIGS. 5 and 6 includes a plurality of single batteries 21. The single battery 21 may be an example of a flat battery according to the embodiment described with reference to FIG. 2.

The plurality of single batteries 21 are stacked so that a negative electrode terminal 51 and a positive electrode terminal 61 extending outside are aligned in the same direction, and are fastened with a pressure-sensitive adhesive tape 22 to constitute a battery module 23. These single batteries 21 are electrically connected to each other in series, as illustrated in FIG. 6.

A printed wiring board 24 is disposed to face a side surface from which the negative electrode terminal 51 and the positive electrode terminal 61 of the single batteries 21 extend. As illustrated in FIG. 6, a thermistor 25, a protective circuit 26, and a power distribution terminal 27 to an external device are mounted on the printed wiring board 24. An insulating plate (not illustrated) is attached to the printed wiring board 24 on a surface facing the battery module 23 in order to avoid unnecessary connection with a wiring of the battery module 23.

A positive electrode-side lead 28 is connected to the positive electrode terminal 61 located in the lowermost layer of the battery module 23, and a tip thereof is inserted into and electrically connected to a positive electrode-side connector 29 of the printed wiring board 24. A negative electrode-side lead 30 is connected to the negative electrode terminal 51 located in the uppermost layer of the battery module 23, and a tip thereof is inserted into and electrically connected to a negative electrode-side connector 31 of the printed wiring board 24. These connectors 29 and 31 are connected to the protective circuit 26 through wirings 32 and 33 formed on the printed wiring board 24.

The thermistor 25 detects the temperature of the single batteries 21 and transmits detection signals to the protective circuit 26. The protective circuit 26 can cut off a plus-side wiring 34a and a minus-side wiring 34b between the protective circuit 26 and the power distribution terminal 27 to an external device under a predetermined condition. An example of the predetermined condition is, for example, when the temperature detected by the thermistor 25 becomes equal to or higher than a predetermined temperature. Another example of the predetermined condition is, for example, when over-charge, over-discharge, over-current, or the like of the single batteries 21 is detected. The detection of the over-charge or the like is performed on each of the single batteries 21 or the entire battery module 23. In a case where each of the single batteries 21 is detected, the battery voltage may be detected, or a positive electrode potential or negative electrode potential may be detected. In the latter case, a lithium electrode to be used as a reference electrode is inserted into each of the single batteries 21. In the case of the battery pack 20 in FIGS. 5 and 6, a wiring 35 for voltage detection is connected to each of the single batteries 21. Detection signals are transmitted to the protective circuit 26 through these wirings 35.

Protective sheets 36 made of rubber or resin are disposed on three side surfaces of the battery module 23 except for the side surface from which the positive electrode terminal 61 and the negative electrode terminal 51 protrude.

The battery module 23 is housed in a housing container 37 together with each of the protective sheets 36 and the printed wiring board 24. That is, the protective sheet 36 is disposed on each of both inner side surfaces in the long side direction and an inner side surface in the short side direction of the housing container 37, and the printed wiring board 24 is disposed on the inner side surface on the opposite side in the short side direction. The battery module 23 is located in a space surrounded by the protective sheets 36 and the printed wiring board 24. A lid 38 is attached to an upper surface of the housing container 37.

For fixing the battery module 23, a heat-shrinkable tape may be used instead of the pressure-sensitive adhesive tape 22. In this case, the protective sheets are disposed on both side surfaces of the battery module, and the heat shrinkable tape is wound around the battery module and protective sheets. After that, the heat shrinkable tape is shrunk by heating to bundle the single batteries.

FIGS. 5 and 6 illustrate the form in which the single batteries 21 are connected in series, but the single batteries may be connected in parallel in order to increase the battery capacity. Further, the assembled battery packs can be connected in series and/or in parallel.

In addition, a mode of the battery pack is appropriately changed depending on the application. The application of the battery pack is preferably one in which good cycle performance is desired when a large current discharge is performed. Specific applications include power source applications for a digital camera, and in-vehicle applications for a two-wheel to four-wheel hybrid electric vehicle, a two-wheel to four-wheel electric vehicle, and an assist bicycle. The battery pack is particularly suitably used in the in-vehicle applications.

The battery pack according to the third embodiment includes the electrode or the battery according to the embodiment. Therefore, the battery pack can exhibit excellent life performance.

EXAMPLES

The present invention will be described in more detail with reference to examples described below, but is not limited to the examples listed below, as long as it does not depart from the spirit of the invention.

(Example 1)

<Production of positive electrode>

A lithium nickel cobalt manganese-containing oxide ($LiNi_{0.8}Co_{0.1}Mn_{0.1}O_2$) containing an alkali component in a proportion of 0.5 wt% was provided as a positive electrode active material comprising-substance. The alkali component contained $Li_2CO_3$ and LiOH. The breaking strength, average particle size D50, and D90/D10 of the positive electrode active material comprising-substance were measured by the above-described methods, and the results are shown in Table 1.

In addition, carbon black was provided as a conductive agent. Then, polyvinylidene fluoride (PVdF) having an acid value of 0.6 mgKOH/g and a molecular weight of 700,000 Da was provided as a binder. The methods for measuring the acid value and the molecular weight are as described above. Next, the positive electrode active material comprising-substance, carbon black, and PVdF were mixed to obtain a mixture. At this time, carbon black was added so as to attain a proportion of 5 wt% with respect to a positive electrode mixture layer (positive electrode material layer) to be produced. PVdF was added so as to attain 2 wt% with respect to the positive electrode mixture layer (positive electrode material layer) to be produced. Next, the obtained mixture was dispersed in an n-methylpyrrolidone (NMP) solvent to prepare a slurry. The obtained slurry was applied to an aluminum foil having a thickness of 12 $\mu$m so that an amount of the slurry to be applied per unit area was 80 g/m$^2$, and dried. The dried coating film was then pressed. In this way, a positive electrode having a basis weight of the positive electrode mixture layer (positive electrode material layer) of 80 g/m$^2$ and a density of 3.3 g/cm$^3$ was produced.

<Production of negative electrode>

As a negative electrode active material, a lithium-titanium composite oxide ($Li_4Ti_5O_{12}$) having a spinel type crystal structure was provided. In addition, graphite was provided as a conductive agent. Then, PVdF was provided as a binder. Next, the negative electrode active material, carbon black, and PVdF were mixed to obtain a mixture. At this time, carbon black was added so as to attain 6 wt% with respect to a negative electrode mixture layer (negative electrode material layer) to be produced. PVdF was added so as to attain 2 wt% with respect to the negative electrode mixture layer (negative electrode material layer) to be produced. Next, the obtained mixture was mixed in an N-methylpyrrolidone (NMP) solution to prepare a slurry. The obtained slurry was applied to a current collector made of an aluminum foil having a thickness of 12 $\mu$m, and dried. Subsequently, the dried coating film was pressed to form a negative electrode mixture layer (negative electrode material layer) on the current collector. In this way, a band-shaped negative electrode having a basis weight of the negative electrode material layer of 100 g/m$^2$ and a density of 2.1 g/cm$^3$ was produced.

<Preparation of nonaqueous electrolyte>

A liquid nonaqueous electrolyte containing 14 vol% of $LiPF_6$, 33 vol% of propylene carbonate (PC), and 53 vol% of diethyl carbonate (DEC) was prepared.

<Production of electrode group>

A stacked electrode group in which the separator was folded zigzag, and a positive electrode and a negative electrode were alternately disposed at the folded portions was produced. The obtained electrode group was housed in a pack (container member) made of a laminate film having a thickness of 0.1 mm, and vacuum-dried at 95°C for 10 hours.

<Production of nonaqueous electrolyte battery>

The liquid nonaqueous electrolyte was injected into the laminate film pack housing the electrode group, and then the pack was completely sealed by heat-sealing to produce a nonaqueous electrolyte battery having a rated capacity of 1Ah.

(Example 2)

A nonaqueous electrolyte battery was produced in the same manner as in Example 1 except that 0.4 wt% of PVdF having an acid value of 0.9 mgKOH/g and a molecular weight of 1,200,000 Da and 1.6 wt% of PVdF having an acid value of 0.6 mgKOH/g and a molecular weight of 700,000 Da were used as binders.

(Example 3)

A nonaqueous electrolyte battery was produced in the same manner as in Example 1 except that a lithium nickel cobalt manganese-containing oxide containing an alkali component in an amount proportion of 0.4 wt% was used as the positive electrode active material comprising-substance. The composition of the lithium nickel cobalt manganese-containing oxide was $LiNi_{0.8}Co_{0.1}Mn_{0.1}O_2$. The alkali component contained $Li_2CO_3$ and LiOH. The breaking strength, average particle size D50, and D90/D10 of the positive electrode active material comprising-substance were measured by the above-described methods, and the results are shown in Table 1.

(Example 4)

A nonaqueous electrolyte battery was produced in the same manner as in Example 1 except that a lithium nickel cobalt manganese-containing oxide containing an alkali component in an amount proportion of 1 wt% was used as a positive electrode active material comprising-substance; and 0.4 wt% of PVdF having an acid value of 0.9 mgKOH/g and a molecular weight of 1,200,000 Da and 1.6 wt% of PVdF having an acid value of 0.6 mgKOH/g and a molecular weight of 700,000 Da were used as binders. The composition of the lithium nickel cobalt manganese-containing oxide was $LiNi_{0.8}Co_{0.1}Mn_{0.1}O_2$. The alkali component contained $Li_2CO_3$ and LiOH. The breaking strength, average particle size D50, and D90/D10 of the positive electrode active material comprising-substance were measured by the above-described methods, and the results are shown in Table 1.

(Example 5)

A nonaqueous electrolyte battery was produced in the same manner as in Example 1 except that PVdF having an acid value of 0.7 mgKOH/g and a molecular weight of 800,000 Da was used as a binder.

(Example 6)

A nonaqueous electrolyte battery was produced in the same manner as in Example 1 except that PVdF having an acid value of 2 mgKOH/g and a molecular weight of 1,100,000 Da was used as a binder.

(Comparative Example 1)

A nonaqueous electrolyte battery was produced in the same manner as in Example 1 except that PVdF having an acid value of 10 mgKOH/g and a molecular weight of 1,000,000 Da was used as a binder.

(Comparative Example 2)

A nonaqueous electrolyte battery was produced in the same manner as in Example 1 except that 0.4 wt% of PVdF having an acid value of 0.9 mgKOH/g and a molecular weight of 1,200,000 Da and 1.6 wt% of PVdF having an acid value of 10 mgKOH/g and a molecular weight of 1,000,000 Da were used as binders.

(Comparative Example 3)

A nonaqueous electrolyte battery was produced in the same manner as in Example 1 except that PVdF having an acid value of 0.9 mgKOH/g and a molecular weight of 1,200,000 Da was used as a binder.

(Comparative Example 4)

A nonaqueous electrolyte battery was produced in the same manner as in Example 1 except that a lithium nickel cobalt manganese-containing oxide containing an alkali component in an amount proportion of 0.3 wt% was used as the positive electrode active material comprising-substance. The composition of the lithium nickel cobalt manganese-containing oxide was $LiNi_{0.5}Co_{0.2}Mn_{0.3}O_2$. The alkali component contained $Li_2CO_3$ and $LiOH$. The breaking strength, average particle size D50, and D90/D10 of the positive electrode active material comprising-substance were measured by the above-described methods, and the results are shown in Table 1.

(Comparative Example 5)

A nonaqueous electrolyte battery was produced in the same manner as in Example 1 except that a lithium nickel cobalt manganese-containing oxide containing an alkali component in an amount proportion of 0.3 wt% was used as a positive electrode active material comprising-substance; and 0.4 wt% of PVdF having an acid value of 0.9 mgKOH/g and a molecular weight of 1,200,000 Da and 1.6 wt% of PVdF having an acid value of 0.6 mgKOH/g and a molecular weight of 700,000 Da were used as binders. The lithium nickel cobalt manganese-containing oxide is of the same type as in Comparative Example 4.

(Comparative Example 6)

A nonaqueous electrolyte battery was produced in the same manner as in Example 1 except that a lithium nickel cobalt manganese-containing oxide containing an alkali component in an amount proportion of 1.1 wt% was used as the positive electrode active material. The composition of the lithium nickel cobalt manganese-containing oxide was $LiNi_{0.8}Co_{0.1}Mn_{0.1}O_2$. The alkali component contained $Li_2CO_3$ and $LiOH$. The breaking strength, average particle size D50, and D90/D10 of the positive electrode active material comprising-substance were measured by the above-described methods, and the results are shown in Table 1.

(Comparative Example 7)

A nonaqueous electrolyte battery was produced in the same manner as in Example 1 except that a lithium nickel cobalt manganese-containing oxide containing an alkali component in an amount proportion of 1.1 wt% was used as a positive electrode active material; and 0.4 wt% of PVdF having an acid value of 0.9 mgKOH/g and a molecular weight of 1,200,000 Da and 1.6 wt% of PVdF having an acid value of 0.6 mgKOH/g and a molecular weight of 700,000 Da were used as binders. The lithium nickel cobalt manganese-containing oxide is of the same type as in Comparative Example 6.

For the nonaqueous electrolyte batteries of the Examples and the Comparative Examples, the peel strength of the positive electrode, the initial resistance of the battery, and the resistance increase rate of the battery were measured by the following methods, and the results are shown in Table 1.

(Peel strength)

The peel strength was measured using a peel strength meter (manufactured by RHEOTECH CO., LTD., RT-2020D·D-CW). After the positive electrode was pressed to a predetermined density, the positive electrode was cut into a 2 cm wide strip, and the strip was pasted to a sample stand with a double-sided tape pasted to the surface at which the peel strength was to be measured. The sample stand was pinched at the lower chuck portion and the electrode surface to which the double-sided tape was not attached was pinched at the upper portion, the descending speed of the sample stand was set to 2 cm/min, the positive electrode was peeled off, and the stress applied at that time was read and taken as the peel strength.

(Initial resistance)

The direct current resistance was measured as an initial resistance using a battery AC/DCImp measuring apparatus (manufactured by Toyo System Co., Ltd., BS208A). The battery was charged to a SOC of 50%, and the direct current resistance at 10 C at room temperature for 0.2 seconds was measured.

(Resistance increase rate)

The resistance value after the charge and discharge test of 1000 cycles was determined by measuring the direct current resistance under the same conditions as the initial resistance. The resistance increase rate after 1000 cycles with respect to the initial resistance was calculated. In the cycle test, constant current constant voltage charge (CC/CV) was performed at a 2 C rate until the SOC reached 100%, and was terminated at a time point when the charge rate converged to 0.05 C. Constant current discharge (CC) at a 2 C rate was terminated at a time point when the SOC reached 0%.

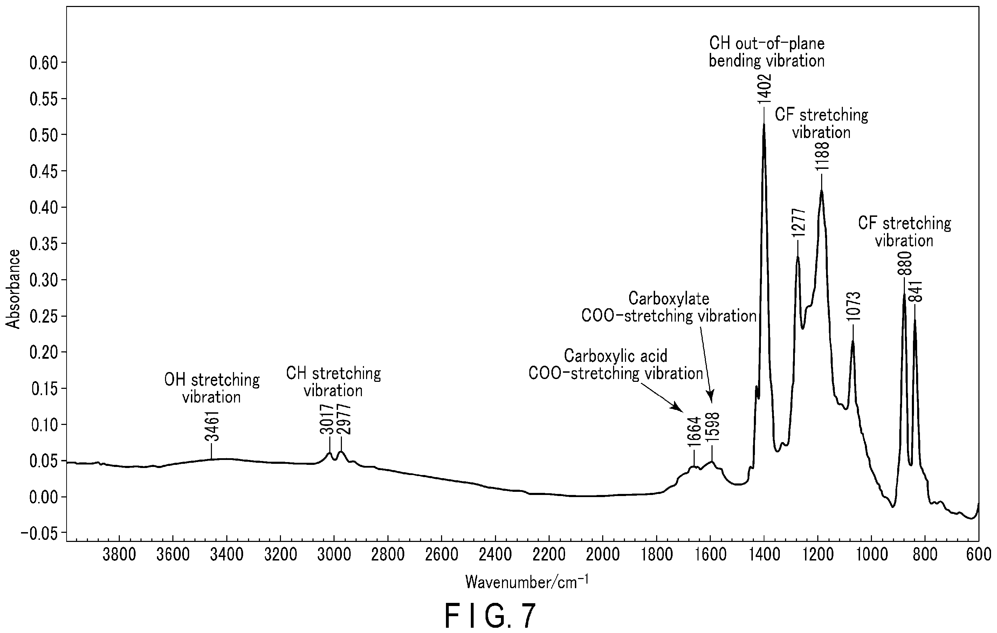

For the nonaqueous electrolyte batteries of the Examples and the Comparative Examples, when the FT-IR spectrum of PVdF in the positive electrode was measured by the above-described method, it could be confirmed that PVdF in the positive electrodes of the Examples and the Comparative Examples has a COOH group and a COOX group (X is Li). An FT-IR spectrum of Example 1 is illustrated in FIG. 7. In the spectrum of FIG. 7, the vertical axis represents absorbance, and the horizontal axis represents wavenumber (Wavenumber, unit: $cm^{-1}$). The peak at 3461 $cm^{-1}$ shows OH stretching vibration, the peaks at 3017 $cm^{-1}$ and 2977 $cm^{-1}$ show CH stretching vibration, the peak at 1664 $cm^{-1}$ shows COO$^-$ stretching vibration of a COOH group, the peak at 1598 $cm^{-1}$ shows COO$^-$ stretching vibration of a COOX group, the peak at 1402 $cm^{-1}$ shows CH out-of-plane bending vibration, and the peaks at 1188 $cm^{-1}$ and 880 $cm^{-1}$ show CF stretching vibration. The intensity A of the peak at 1664 $cm^{-1}$ is 0.051, and the intensity B of the peak at 1598 $cm^{-1}$ is 0.059.

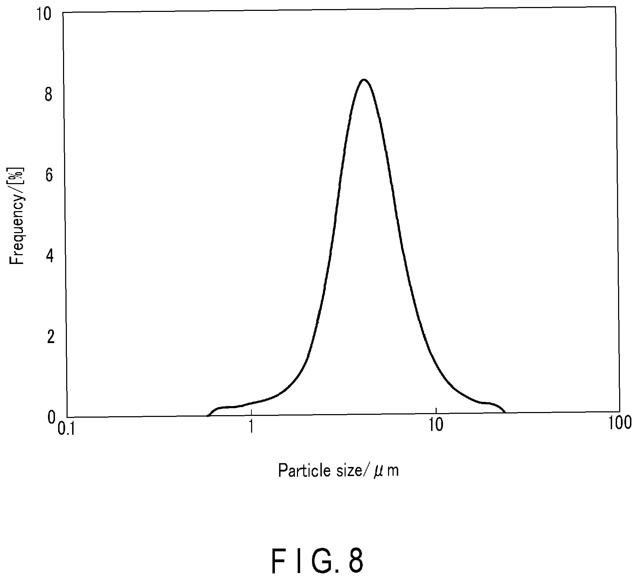

In addition, among the results of measuring the particle size distribution of the active material comprising-substance in the positive electrode of the nonaqueous electrolyte batteries of the Examples and the Comparative Examples by the above-described method, the particle size distribution of Example 1 is illustrated in FIG. 8. In the particle size distribution of FIG. 8, the horizontal axis represents the particle size ($\mu$m) of the active material comprising-substance, and the vertical axis represents the volume-based frequency (%). In the particle size distribution of Example 1, D10 was 2.3 $\mu$m, D50 was 4.1 $\mu$m, and D90 was 7.5 $\mu$m. As is apparent from the particle size distribution in FIG. 8, the peak of the particle size distribution of Example 1 is sharp, and the particle size distribution of Example 1 has high monodispersibility. On the other hand, the particle size distribution of Examples 2 to 6 also had a sharp peak and high monodispersibility as in Example 1. The breaking strength of the active material comprising-substances of Examples 1 to 6 is high as illustrated in Table 1. From these results, it could be confirmed that the active material comprising-substances of Examples 1 to 6 contained more single particles than secondary particles.

[Table 1]

|  | Positive electrode Alkali component content (wt%) | Peak intensity ratio (B/A) | Breaking strength (MPa) | Average particle size D50 ($\mu$m) | D90/D10 | Peel strength (N) | Initial resistance (m$\Omega$) | Resistance increase rate (1000 cycles) |
|---|---|---|---|---|---|---|---|---|
| Example 1 | 0.5 | 1.2 | 173.5 | 4.1 | 3.3 | 7 | 13.7 | 1.17 |
| Example 2 | 0.5 | 0.5 | 173.5 | 4.1 | 3.3 | 5 | 13.8 | 1.18 |
| Example 3 | 0.4 | 1 | 152.9 | 5.8 | 2.8 | 6 | 13.6 | 1.21 |
| Example 4 | 1 | 0.9 | 203.4 | 5.1 | 3.1 | 14 | 14.2 | 1.23 |
| Example 5 | 0.5 | 0.4 | 173.5 | 4.1 | 3.3 | 5 | 13.8 | 1.2 |
| Example 6 | 0.5 | 1.5 | 173.5 | 4.1 | 3.3 | 9 | 14.1 | 1.23 |
| Comparative Example 1 | 0.5 | >10 | 173.5 | 4.1 | 3.3 | 24 | 15.1 | 1.27 |
| Comparative Example 2 | 0.5 | 1.6 | 173.5 | 4.1 | 3.3 | 15 | 14.8 | 1.31 |
| Comparative Example 3 | 0.5 | <0.1 | 173.5 | 4.1 | 3.3 | 3 | 14.1 | 1.42 |
| Comparative Example 4 | 0.3 | 0.7 | 51.8 | 6.0 | 2.4 | 3 | 15.5 | 1.58 |
| Comparative Example 5 | 0.3 | 0.3 | 51.8 | 6.0 | 2.4 | 2 | 15.9 | 1.63 |
| Comparative Example 6 | 1.1 | 2.5 | 50.4 | 13.4 | 8.2 | 16 | 14.3 | 1.88 |

(continued)

|  | Positive electrode Alkali component content (wt%) | Peak intensity ratio (B/A) | Breaking strength (MPa) | Average particle size D50 (μm) | D90/D10 | Peel strength (N) | Initial resistance (mΩ) | Resistance increase rate (1000 cycles) |
|---|---|---|---|---|---|---|---|---|
| Comparative Example 7 | 1.1 | 1.3 | 50.4 | 13.4 | 8.2 | 12 | 14.7 | 1.91 |
| Continued | | | | | | | | |

As is apparent from Table 1, the electrodes of Examples 1 to 6 have a smaller resistance increase rate after 1000 charge-and-discharge cycles than those of the electrodes of Comparative Examples 1 to 7.

On the other hand, the electrodes of Comparative Examples 1 and 2 in which the peak intensity ratio B/A exceeds 1.5 have a high peel strength, but are larger in both initial resistance and resistance increase rate than those in Examples 1 to 6. The electrode of Comparative Example 3 in which the peak intensity ratio B/A is less than 0.1 has a low peel strength, and a larger resistance increase rate than that in Examples 1 to 6. On the other hand, the electrodes of Comparative Examples 4 and 5 in which the content of the alkali component is less than 0.4 wt% have a low peel strength, and are larger in both initial resistance and resistance increase rate than those in Examples 1 to 6. On the other hand, the electrodes of Comparative Examples 6 and 7 in which the content of the alkali component is more than 1 wt% have a high peel strength, but are larger in both initial resistance and resistance increase rate than those in Examples 1 to 6.

The inventions of the embodiments will be additionally described.

<1>. An electrode comprising:

an active material comprising-substance comprising an active material comprising a lithium nickel cobalt manganese-containing oxide and 0.4 wt% or more and 1 wt% or less of an alkali component comprising at least one of lithium carbonate or lithium hydroxide; and
a binder having a ratio B/A of 0.4 or more and 1.5 or less, where B is an intensity of a peak appearing in a range of 1580 cm$^{-1}$ or more and 1600 cm$^{-1}$ or less in a Fourier transformation infrared spectroscopic spectrum, and A is an intensity of a peak appearing in a range of 1662 cm$^{-1}$ or more and 1682 cm$^{-1}$ or less in the Fourier transformation infrared spectroscopic spectrum.

<2>. The electrode according to <1>, wherein the binder comprises polyvinylidene fluoride having a COOZ group, where Z comprises at least one element of H or Li.

<3>. The electrode according to <1> or <2>, wherein the lithium nickel cobalt manganese-containing oxide is represented by $Li_aNi_{(1-b-c-d)}Co_bMn_cM_dO_2$, where $1 \leq a \leq 1.2$, $0 < b \leq 0.4$, $0 < c \leq 0.4$, $0 \leq d \leq 0.1$, and M is one or more elements selected from the group consisting of Fe, Cu, Ti, Mg, Al, W, Y, B, Mo, Nb, Zn, Sn, Zr, Ga, and V.

<4>. The electrode according to any one of <1> to <3>, wherein the active material has a breaking strength of 30 MPa or more and 300 MPa or less.

<5>. The electrode according to any one of <1> to <4>, wherein the active material has a particle shape and an average particle size by a laser diffraction scattering method of 2 μm or more and 8 μm or less.

<6>. The electrode according to any one of <1> to <5>, wherein the active material has a particle shape, and a ratio D90/D10 in a volume-based cumulative frequency distribution of particle sizes based on a particle size distribution by a laser diffraction scattering method of 4 or less, where D10 is a particle size at which a cumulative frequency from a small particle size side of the cumulative frequency distribution is 10%, and D90 is a particle size at which the cumulative frequency from the small particle size side of the cumulative frequency distribution is 90%.

<7>. The electrode according to any one of <1> to <6>, wherein the active material has a single particle shape.

<8>. The electrode according to any one of <1> to <7>, wherein the electrode has a density of 3.1 g/cm$^3$ or more and 3.5 g/cm$^3$ or less.

<9>. A battery comprising:

a positive electrode comprising the electrode according to any one of <1> to <8>; and
a negative electrode.

<10>. The battery according to <9>, wherein the negative electrode comprises a titanium-containing oxide.

<11>. The battery according to <9> or <10>, wherein the titanium-containing oxide comprises at least one selected from the group consisting of a lithium-titanium composite oxide having a spinel crystal structure, a lithium-titanium composite oxide having a ramsdellite crystal structure, a niobium-titanium composite oxide, and titanium dioxide.

<12>. The battery according to any one of <9> to <11>, further comprising a nonaqueous electrolyte.

<13>. A battery pack comprising the battery according to any one of <9> to <12>.

Some embodiments of the present invention have been described, but these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention and are also included in the invention described in the claims and the equivalent scope thereof.

REFERENCE SIGNS LIST

| 1 | Wound electrode group |
| 2 | Container member |
| 3 | Positive electrode |
| 3a | Positive electrode current collector |
| 3b | Positive electrode mixture layer (positive electrode active material-containing layer) |
| 3c | Positive electrode tab |
| 4 | Negative electrode |
| 4a | Negative electrode current collector |
| 4b | Negative electrode active material-containing layer |
| 5 | Separator |
| 6 | Negative electrode terminal |
| 7 | Positive electrode terminal |
| 11 | Wound electrode group |
| 12 | Container |
| 13 | Lid body |
| 14 | Negative electrode tab |
| 15 | Negative electrode terminal |
| 16 | Glass material |
| 17 | Positive electrode tab |
| 18 | Positive electrode terminal |
| 20 | Battery pack |
| 21 | single battery |
| 22 | Pressure-sensitive adhesive tape |
| 23 | Battery module |
| 24 | Printed wiring board |
| 25 | Thermistor |
| 26 | Protective circuit |
| 27 | Power distribution terminal |
| 28 | Positive electrode-side lead |
| 29 | Positive electrode-side connector |
| 30 | Negative electrode-side lead |
| 31 | Negative electrode-side connector |
| 32 | Wiring |
| 33 | Wiring |
| 34a | Plus-side wiring |
| 34b | Minus-side wiring |
| 35 | Wiring |
| 36 | Protective sheet |
| 37 | Housing container |
| 38 | Lid |
| 51 | Negative electrode terminal |
| 61 | Positive electrode terminal |

**Claims**

1. An electrode comprising:

   an active material comprising-substance comprising an active material comprising a lithium nickel cobalt manganese-containing oxide and 0.4 wt% or more and 1 wt% or less of an alkali component comprising at least one of lithium carbonate or lithium hydroxide; and
   a binder having a ratio B/A of 0.4 or more and 1.5 or less, where B is an intensity of a peak appearing in a range of 1580 $cm^{-1}$ or more and 1600 $cm^{-1}$ or less in a Fourier transformation infrared spectroscopic spectrum, and A is an intensity of a peak appearing in a range of 1662 $cm^{-1}$ or more and 1682 $cm^{-1}$ or less in the Fourier transformation infrared spectroscopic spectrum.

2. The electrode according to claim 1, wherein the binder comprises polyvinylidene fluoride having a COOZ group, where Z comprises at least one element of H or Li.

3. The electrode according to claim 1, wherein the lithium nickel cobalt manganese-containing oxide is represented by $Li_aNi_{(1-b-c-d)}Co_bMn_cM_dO_2$, where $1 \leq a \leq 1.2$, $0 < b \leq 0.4$, $0 < c \leq 0.4$, $0 \leq d \leq 0.1$, and M is one or more elements selected from the group consisting of Fe, Cu, Ti, Mg, Al, W, Y, B, Mo, Nb, Zn, Sn, Zr, Ga, and V.

4. The electrode according to claim 1, wherein the active material has a breaking strength of 30 MPa or more and 300 MPa or less.

5. The electrode according to claim 1, wherein the active material has a particle shape and an average particle size by a laser diffraction scattering method of 2 $\mu$m or more and 8 $\mu$m or less.

6. The electrode according to claim 1, wherein the active material has a particle shape, and a ratio D90/D10 in a volume-based cumulative frequency distribution of particle sizes based on a particle size distribution by a laser diffraction scattering method of 4 or less, where D10 is a particle size at which a cumulative frequency from a small particle size side of the cumulative frequency distribution is 10%, and D90 is a particle size at which the cumulative frequency from the small particle size side of the cumulative frequency distribution is 90%.

7. The electrode according to claim 1, wherein the active material has a single particle shape.

8. The electrode according to claim 1, wherein the electrode has a density of 3.1 $g/cm^3$ or more and 3.5 $g/cm^3$ or less.

9. A battery comprising:

   a positive electrode comprising the electrode according to any one of claims 1 to 8; and
   a negative electrode.

10. The battery according to claim 9, wherein the negative electrode comprises a titanium-containing oxide.

11. The battery according to claim 10, wherein the titanium-containing oxide comprises at least one selected from the group consisting of a lithium-titanium composite oxide having a spinel crystal structure, a lithium-titanium composite oxide having a ramsdellite crystal structure, a niobium-titanium composite oxide, and titanium dioxide.

12. The battery according to claim 11, further comprising a nonaqueous electrolyte.

13. A battery pack comprising the battery according to claim 9.

F I G. 1

F I G. 2

F I G. 3

F I G. 4

F I G. 5

F I G. 6

F I G. 7

EP 4 641 694 A1

FIG. 8

## INTERNATIONAL SEARCH REPORT

| International application No. |
|---|
| **PCT/JP2022/047726** |

### A. CLASSIFICATION OF SUBJECT MATTER

***H01M 4/62***(2006.01)i; ***H01M 4/131***(2010.01)i; ***H01M 4/485***(2010.01)i; ***H01M 4/505***(2010.01)i; ***H01M 4/525***(2010.01)i; ***H01M 10/052***(2010.01)i; ***H01M 10/0565***(2010.01)i; ***H01M 10/0566***(2010.01)i
FI: H01M4/62 Z; H01M4/131; H01M4/505; H01M4/525; H01M4/485; H01M10/0565; H01M10/0566; H01M10/052

According to International Patent Classification (IPC) or to both national classification and IPC

### B. FIELDS SEARCHED

Minimum documentation searched (classification system followed by classification symbols)

H01M4/62; H01M4/131; H01M4/485; H01M4/505; H01M4/525; H01M10/052; H01M10/0565; H01M10/0566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-045632 A (SUMITOMO METAL MINING CO., LTD.) 02 March 2017 (2017-03-02) entire text, all drawings | 1-13 |
| A | WO 2017/138382 A1 (NEC ENERGY DEVICES LTD) 17 August 2017 (2017-08-17) entire text, all drawings | 1-13 |
| A | JP 04-328278 A (SONY CORP) 17 November 1992 (1992-11-17) entire text, all drawings | 1-13 |
| A | JP 2000-268825 A (TOSHIBA BATTERY CO LTD) 29 September 2000 (2000-09-29) entire text, all drawings | 1-13 |
| A | JP 11-130821 A (KUREHA CHEMICAL IND CO LTD) 18 May 1999 (1999-05-18) entire text, all drawings | 1-13 |
| A | CN 115036568 A (UNIVERSITY OF JINAN) 09 September 2022 (2022-09-09) entire text, all drawings | 1-13 |

[✓] Further documents are listed in the continuation of Box C.　　[✓] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 February 2023** | **14 March 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

International application No.

**PCT/JP2022/047726**

**C. DOCUMENTS CONSIDERED TO BE RELEVANT**

| Category* | Citation of document, with indication, where appropriate, of the relevant passages | Relevant to claim No. |
|---|---|---|
| A | WO 98/55557 A1 (DAIKIN INDUSTRIES LTD) 10 December 1998 (1998-12-10)<br>entire text, all drawings | 1-13 |

Form PCT/ISA/210 (second sheet) (January 2015)

## INTERNATIONAL SEARCH REPORT
### Information on patent family members

International application No.

**PCT/JP2022/047726**

| Patent document cited in search report | | | Publication date (day/month/year) | Patent family member(s) | | | Publication date (day/month/year) |
|---|---|---|---|---|---|---|---|
| JP | 2017-045632 | A | 02 March 2017 | US | 2020/0227718 | A1 | |
| | | | | entire text, all drawings | | | |
| | | | | WO | 2017/034000 | A1 | |
| | | | | CN | 107925078 | A | |
| WO | 2017/138382 | A1 | 17 August 2017 | (Family: none) | | | |
| JP | 04-328278 | A | 17 November 1992 | US | 5427875 | A | |
| | | | | entire text, all drawings | | | |
| | | | | WO | 1992/020112 | A1 | |
| | | | | EP | 536425 | A1 | |
| JP | 2000-268825 | A | 29 September 2000 | (Family: none) | | | |
| JP | 11-130821 | A | 18 May 1999 | US | 6372388 | B1 | |
| | | | | entire text, all drawings | | | |
| | | | | WO | 1999/005191 | A1 | |
| | | | | EP | 999223 | A1 | |
| CN | 115036568 | A | 09 September 2022 | (Family: none) | | | |
| WO | 98/55557 | A1 | 10 December 1998 | US | 6479161 | B1 | |
| | | | | entire text, all drawings | | | |
| | | | | WO | 1998/055557 | A1 | |

Form PCT/ISA/210 (patent family annex) (January 2015)

**EP 4 641 694 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007103134 A
- JP 2013534031 W
- JP 2019164960 A